# EUROPEAN PATENT SPECIFICATION

(11) **EP 0 371 722 B1**
(45) Date of publication and mention of the grant of the patent: **31.08.1994**
(21) Application number: 89312278.8
(22) Date of filing: 27.11.1989
(51) Int. Cl.: B67D 3/00, G01F 11/30

(54) **Dispensing device and method**
Abgabe - Vorrichtung und Verfahren
Dispositif de distribution et procédé d'utilisation

(30) Priority: 29.11.1988 GB 8827809
(43) Date of publication of application: 06.06.1990
(73) Proprietor: CAPE CORAL INVESTMENTS LIMITED, Gibraltar (GI)
(72) Inventor: Sams, Bernard, London N12 8EJ (GB)
(74) Representative: Dummett, Thomas Ian Peter

(56) References cited:
- EP-A- 0 123 512
- GB-A- 2 165 524
- GB-A- 2 210 024

## Description

The present invention relates to a pivoting valve mechanism in a dispensing device, notably to a valve mechanism for use in measuring aliquots of a fluid, specifically a spirit or other beverage, and to a method for dispensing.

### BACKGROUND TO THE INVENTION:

In many forms of spirit measure, the spirit flows into a measuring chamber having the desired volume through a valved inlet and is discharged via a valved outlet once the chamber is full. Typically, the valves controlling the flow into and out of the chamber are provided as opposed end portions on an axial valve body which is moved axially from a lower position at which the inlet valve is open but the outlet valve is closed, to an upper position at which the inlet valve is closed and the outlet valve is open. The valve body is usually urged by a spring or other bias means into its lower position where the outlet valve is closed and is moved by means of transverse arms against which the rim of a glass to be filled is pressed. This may present a risk of transmission of disease and infection from one glass to another.

Alternative forms of valve mechanism have been proposed, for example that in GB-A-2195982, in which the valve is actuated by a downwardly extending lever which lies behind a glass offered up to the device and which is acted on by the hand of the operator rather than the rim of the glass. Whilst this may overcome the problem of possible disease transmission, there is still a risk that the two valves will be open simultaneously as the valve body within the device moves from one position to the other. This would give an open flow path for the spirit through the chamber, which could allow excessive liquid to be dispensed at each actuation.

European Patent Application No EP-A-0123512 describes a device in accordance with the preamble of claims 1 and 3, comprising a valve mechanism in which a pivoting valve block carries two extending valve stems loosely mounted therein, each surrounded by a resilient sleeve carrying an end face which acts as the obturator for the inlet or outlet aperture with which the end face of the sleeve engages. The valve block is strongly biassed to the outlet closed position. Due to the lost motion between the valve block and the valve stems, the resilience of the sleeve retains the end face of one sleeve in engagement with the inlet aperture until the end face of the other sleeve has been lifted clear of the outlet aperture as the valve block is pivoted between the outlet aperture closed and open positions, and vice versa. Such a construction is complex and relies upon the small spring effect of the resilient sleeves to retain the end faces of the sleeves in sealing engagement with the apertures once the pressure of the valve stem has been lifted off the interior of the end face as the valve block pivots. Furthermore, the mechanism has to be provided with some means for overcoming the spring bias acting on the valve block so that the mechanism is retained in the outlet aperture open position for sufficient time to allow the contents of the device to discharge through the outlet aperture, further adding to the complexity of the design and construction of the device.

We have devised a form of valve which reduces the above problems.

### SUMMARY OF THE INVENTION:

Accordingly, the present invention provides a device for dispensing known aliquots of a fluid upon actuation of the device by a user operating an actuating mechanism, which device comprises a fluid receiving chamber 3 having a fluid inlet port 5 and a fluid outlet port 6 and valve means 7, 8, 9 located at least in part within the chamber 3 for regulating the flow of fluid into and out of the chamber 3, the valve means 7, 8, 9 comprising obturator members 7, 8 located within the chamber 3 and urged axially apart by a spring means 9 whereby they selectively engage with and seal the chamber inlet and outlet ports 5, 6 to the chamber 3, the pivotally mounted member 11 carrying said spring means and the actuating mechanism being adapted to act on the pivotally mounted member 11 so as to cause the pivotally mounted member 11 to pivot about an axis 12 so as to move the obturator members 7, 8 axially between a position at which the outlet port 6 is closed and the inlet port 5 is open and a position at which the outlet port 6 is open and the inlet port 5 is closed and vice versa, characterised in that:
a. the spring member 9 comprises two splayed apart leaf spring arms which carry the obturator members 7, 8 at or adjacent the free ends thereof, which spring arms are splayed apart sufficiently to urge the obturator members 7, 8 axially relative to one another and into sealing engagement with the co-operating inlet 5 or outlet 6 port of the chamber 3; and
b. the pivotally mounted member 11 is pivoted against the effect of said spring arms so as to move only a selected one of said obturator members 7, 8 out of sealing engagement with its co-operating port 5, 6 at a time.

In a particularly preferred form of the device the spring arms of said spring member 9 are provided by a V spring 9 which is mounted at or adjacent its apex in said pivotally mounted member 11.

In an alternative form of the device, the spring member 9 is provided by a compression spring located between the inlet and outlet ports.

From another aspect the invention therefore also provides a device for dispensing known aliquots of a fluid upon actuation of the device by a user operating an actuating mechanism, which device comprises a fluid receiving chamber 3 having a fluid inlet port 5 and a fluid outlet port 6 and valve means 7, 8, 9 located at least in part within the chamber 3 for regulating the flow of fluid into and out of the chamber 3, the valve means 7, 8, 9 comprising obturator members 7, 8 located within the chamber 3 and urged axially apart by a spring means 9 whereby they selectively engage with and seal the chamber inlet and outlet ports 5, 6 to the chamber 3, the pivotally mounted member 11 carrying said spring means and the actuating mechanism being adapted to act on the pivotally mounted member 11 so as to cause the pivotally mounted member 11 to pivot about an axis 12 so as to move the obturator members 7, 8 axially between a position at which the outlet port 6 is closed and the inlet port 5 is open and a position at which the outlet port 6 is open and the inlet port 5 is closed and vice versa, characterised in that:
a. the spring member 9 comprises a compression spring member 10 located between the inlet port 5 and the outlet port 6 to chamber 3, which compression spring 10 carries the obturator members 7, 8 at or adjacent the free ends thereof, which compression spring 10 urges the obturator members 7, 8 axially relative to one another and into sealing engagement with the co-operating inlet 5 or outlet 6 port of the chamber 3; and
b. the pivotally mounted member 11 carries one or more projecting members adapted to engage said compression spring 10, which member 11 is pivoted to cause said projecting members to act against the effect of said compression spring 10 so as to move only a selected one of said obturator members 7, 8 out of sealing engagement with its co-operating port 5, 6 at a time.

Preferably, the actuator mechanism in the above devices also serves to retain the pivotally mounted member in the inlet port closed position whilst the contents of the device are discharged from said chamber.

According to a further aspect the invention provides a method for dispensing using the above devices.

The invention can be applied wherever it is desired to dispense a known volume of fluid. However, it is of especial use in the dispensing of measured aliquots of beverages, notably spirit drinks, at a bar or the like. For convenience, the invention will be described hereinafter in terms of that preferred use.

The spring member acts in axially opposed directions to urge both the inlet port and the outlet port obturators simultaneously towards sealing engagement with the ports. It is preferred that the ports are located at the inner face of the chamber, that the obturators are located wholly within the chamber, and that the spring member acts under compression to urge the obturators axially into sealing engagement with the rims of the ports.

A particularly preferred form of spring is a generally V shaped member comprising two leaf spring arms or a single V shaped member made from spring steel or a spring plastic material. The V shaped member carries the obturator members at or adjacent the free ends of the arms thereof whereby the splaying action of the arms urges both obturator members axially apart simultaneously. An alternative form of the spring member is a compression spring.

It is also preferred that the spring member be configured such that when it is assembled into the measuring chamber it is under compression and requires axial displacement in one direction or the other to release the sealing pressure from one or the other of the obturators but not from both simultaneously.

The spring member can be configured so that it adopts a fail safe position at which both ports are sealed by the obturator members. However, it will usually be preferred that the mechanism adopts a position such that when the obturator for one port is in sealing engagement with that port, the obturator for the other port is held clear of the other port so that the other port is open. In this latter case it is preferred that the spring member is configured so that, as the spring moves from one extreme of its travel to the other, it exerts a sealing pressure on the first obturator to maintain the first port closed until the second obturator seals into the second port, so that both ports are not open simultaneously and a through flow path for fluid is not created.

Whilst the device can be actuated by external means, for example by an axial push mechanism, acting through the outlet port from the chamber, it is preferred that the obturators be moved by pivoting an external lever located behind the position at which a glass is presented to the outlet to the device and that the device is operated by a deflecting pressure from the hand of a user rather than by the upthrust of the rim of a glass. The lever acts via a suitable linkage to pivot the pivotally mounted member and thus cause compression of one end or the other of the spring member so as to release the sealing pressure from the other obturator. Thus, the V shaped spring member, or arms which engage with and move an axially orientated coil spring member, are mounted upon a member which pivots about a transverse pivot member. The actuating lever causes the pivot member to rotate about a transverse axis so that the pivoting member rotates and hence the spring member is deflected upwardly or downwardly to alter the sealing pressure exerted by the spring member on one obturator at a time.

Preferably, the pivot mechanism or the actuation lever to which the pivot is mechanically linked is biassed by a spring or other means so that the spring within the chamber adopts a rest position at which the lower obturator engages with the outlet port, but the upper obturator is held clear of the inlet port.

It is preferred to provide the pivoting member as a block within the chamber which is mounted on a transverse pivot pin or shaft which is mechanically linked to the external operating lever. Where the spring member is a coil spring which is to be moved axially, the block can carry projecting arms which engage with one or more coils of the spring. When the block pivots about its transverse axis, the projecting arms move axially and thus move the spring up or down within the chamber. In the case of the preferred V shaped spring member, the spring member is mounted at or adjacent its apex to the block carried on the transverse pin or shaft so that its arms of the V spring extend axially from the block. Pivoting of the block causes the V spring to increase its pressure on one obturator whilst reducing its pressure on the other.

The block carrying the spring member or the projecting arms for engaging the spring member can be a simple rectangular block into which the arms or spring are secured by any suitable means. As described below, the block can serve secondary functions and can have a cammed or other face. The block can be mounted on the transverse pivot or shaft by any suitable means, for example by passing a flatted section of the shaft through a corresponding slot in the block so that the block and the shaft pivot together.

Actuation of the valve operating means causes the spring member to move axially so that the upper end of the spring and the obturator it carries are biassed upwardly to bring the upper obturator into sealing engagement with the inlet port and thus cut off the supply of fluid to the chamber. Further movement of the spring member maintains the pressure on the upper obturator to hold the inlet port closed, and progressively raises the lower end or arm of the spring member. As the lower end or arm is raised, it progressively releases the sealing pressure of the spring on the obturator member serving the lower outlet port until the obturator is carried clear of the port to allow fluid to drain from the chamber. Thus, the operation of the spring member ensures that only one port is open at a time and that no free flow path through the chamber is formed.

It is preferred that, once the upper obturator has engaged in the inlet port, the actuation mechanism should require pivoting through a further at least 5°, preferably 7 to 15°, before the sealing pressure is released from the lower obturator. In this way the spring member acts positively on the obturators to prevent simultaneous opening of both the inlet and outlet ports.

### DESCRIPTION OF THE DRAWING:

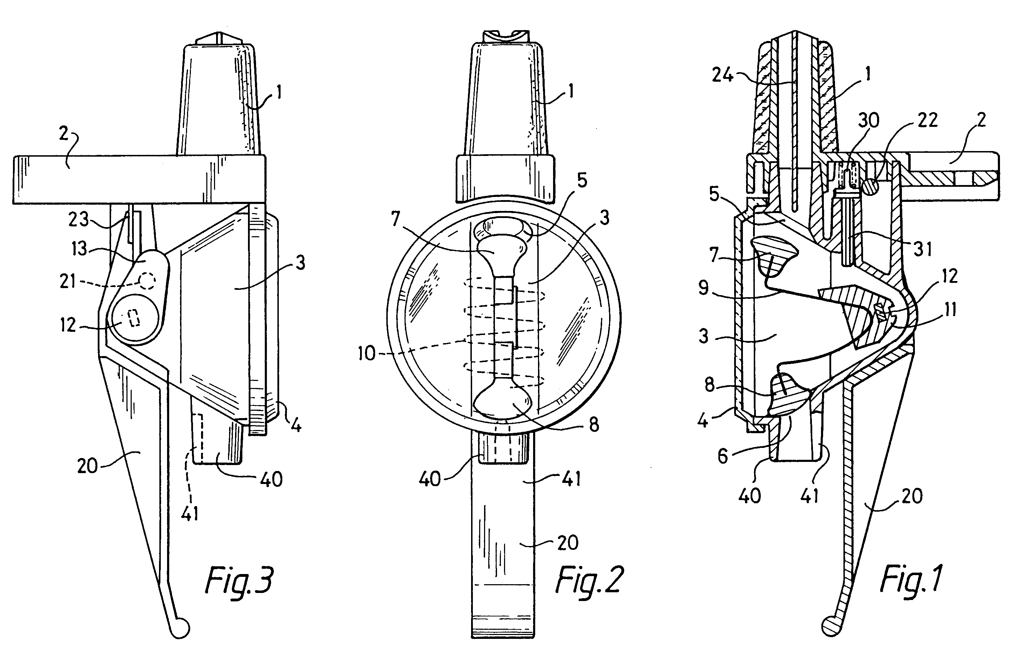

To aid understanding of the invention, it will be described hereinafter in terms of a preferred form thereof as shown in the accompanying drawings in which: Figure 1 is a diagrammatic side view of a vertical cross-section through the device; Figure 2 is a front elevation of the device of Figure 1; and Figure 3 is a side elevation of the device of Figure 1.

### DESCRIPTION OF THE PREFERRED EMBODIMENT:

The device comprises an axial spigot 1 which can be inserted axially into the neck of a bottle (not shown) to provide an outlet for the contents of the bottle. The spigot carries a transverse arm 2 by which the device can be mounted under a shelf at a bar or otherwise in the conventional manner with the bottle located above the device and orientated with its longitudinal axis substantially vertical.

The spigot 1 has an axial bore which debouches into a chamber 3 having a generally vertical transparent convex front face 4 through which the contents of the chamber 3 can be seen. If desired, the face 4 can be demountable so that it can be replaced with alternative faces with a greater or lesser curve form so as to alter the volume within chamber 3. As shown, the chamber 3 is of a generally equilateral triangular shape in vertical section with the lower side of the chamber being inclined to the horizontal so that fluid can readily drain from the chamber. However, the chamber may have other shapes, if desired.

Chamber 3 has an upper inlet port 5 in fluid flow communication with the bore of the spigot 1; and a lower outlet port 6 located substantially at the lowest point of chamber 3 so that the internal volume of the chamber corresponds to the volume of the fluid to be dispensed. The ports 5 and 6 are preferably diametrically opposed to one another across the width of chamber 3. Where chamber 3 is of triangular cross-section as described above, the inlet and outlet ports can be angled to the horizontal as shown; or the inlet and outlet to the chamber can be formed as inset tubular members so that the planes of the orifices of the ports are orientated substantially horizontally.

The ports 5 and 6 are provided with obturators 7 and 8 which seat into the ports in sealing engagement therewith. The obturators 7 and 8 can be of any suitable shape, but are conveniently simple plug-like members which conform to the shape of the ports they are to serve. The sealing face of the obturators 7 and 8 can be made from or carry a rubber or similar resilient material to improve the sealing interface contact between the obturators and the rims of the ports. If required, the co-operating faces of the obturators and the ports can be angled to provide mating faces to enhance the seal obtained between them. Alternatively, the rim of the port and/or the obturator can carry one or more sealing ribs or the like to achieve a fluid-tight seal.

The obturators are carried on a spring member which urges them axially into sealing engagement with the ports 5 and 6. As shown in Figure 1, the spring member may be provided by a length of spring steel or plastic strip or rod bent about its approximate mid-point to form a V shaped spring 9. The obturators 7 and 8 are carried at the free ends of the arms of the V and are urged apart by the splaying action of the spring.

Alternatively, as shown dotted in Figure 2, the spring 9 can be in the form of a coil compression spring 10 carrying the obturators 7 and 8 terminally thereon and acting axially to urge the obturators into sealing engagement with the inlet and outlet ports.

With the V spring shown in Figure 1, the spring is mounted at its apex in a block 11 which pivots about the axis of a transverse pin 12 extending through the side wall of the chamber 3. The V spring can be sufficiently splayed so that both the inlet and outlet ports are closed simultaneously by the obturators 7 and 8 when the block 11 adopts its rest position. However, it is preferred that the obturator 7 be clear of the inlet port 5 when the block 11 adopts its rest position so that fluid can flow into the chamber to fill it in readiness for a discharge cycle as described below. The V spring can readily be configured so that this position is achieved when the spring is mounted into a suitable slot in block 11.

Where spring 9 is a compression coil spring 10, as shown in Figure 2, pin 12 or block 11 may carry two forwardly projecting arms which engage between two coils of the spring at approximately the mid-point of the spring 10. When pin 12 rotates, the arms will raise or lower the spring 10, thus lifting the obturator 8 clear of the outlet port 6 whilst seating obturator 7 against the rim of inlet port 5 and vice versa.

Block 11 is mounted on the pin 12 by any suitable means. As shown, it is preferred that pin 12 have a rectangular or other non-circular cross-section which is a tight push fit within a corresponding slot in block 11 so that they retain their angular relationship to one another when pin 12 is rotated. Pin 12 extends through the side wall of chamber 3 and is interlinked with an operating lever 20 which the user presses when it is desired to discharge the contents of the chamber. The interlink is preferably by means of a radial arm 13 carried by pin 12 which is linked, for example by means of pivot pin 21 carried at or adjacent the free end of arm 13, to the lever 20 which extends axially downwardly from the rear of the device so that its free end lies behind a glass offered up to the device. As the free end of lever 20 is pressed backwards by a user, arm 13 pivots about the axis of pin 12 and causes the pin to rotate clockwise (in the case of Figure 1).

The operating lever 20 preferably takes the form of a dependent arm pivotally mounted by means of a pivot pin 22 on the transverse arm 2 so that the lever pivots about a transverse axis located above block 11. The lever 20 is spring biassed in a clockwise direction (in the case of Figure 1) so that it bears against the pin 21 on arm 13 and urges that in an anti-clockwise direction to retain obturator 8 in sealing engagement with the outlet port 6. Conveniently, the spring bias for lever 20 is provided by a wire or leaf spring 23 acting between arm 2 and lever 20. However, a coil spring or any other suitable form of bias may be used.

As is conventional, the device can be provided with other features to enhance its operation. Thus, an air bleed valve 30 can be provided to allow air to enter the bottle via chamber 3 to replace fluid as it is dispensed. For example, a spring loaded air valve having a stem 31 can be provided in the upper wall of chamber 3. The stem 31 projects downwardly to bear against the upper face of block 11 as that is rotated. This face can be cammed or otherwise formed to assist the smooth lifting of stem 31. As stem 31 is raised, this lifts the valve and allows air to enter the chamber through an air inlet normally sealed by the valve 30 as fluid discharges form the chamber. The air can then enter the bottle via the bore in spigot 1. If desired the bore can be provided with a longitudinal baffle 24 to separate the upward flow of air in the spigot from the downward flow of fluid from the bottle.

The fluid from outlet port 6 can flow under gravity to a dispensing spout 40 of any suitable form, shape and size. It is preferred to provide the spout 40 with an air bleed, for example with a slot 41 in the wall thereof or an internal air tube, to assist complete emptying of fluid from the spout and to reduce the amount of fluid held by a vacuum within the spout.

From a specific aspect, the invention thus provides a device for dispensing known aliquots of a beverage, which device comprises a fluid receiving chamber 3 having a generally triangular internal vertical cross-section and a substantially vertical front face 4, said chamber 3 having at or adjacent it upper apex a fluid inlet port 5 and at or adjacent its lower apex a fluid outlet port 6; a valve means 7,8,9 located within the chamber 3 for regulating the flow of fluid into and out of the chamber through the said inlet and outlet ports 5,6, characterised in that the valve means comprises a V shaped spring member mounted at or adjacent its apex in a support member 11 mounted upon a transverse pivot pin 12 located at or adjacent the rearward apex of the chamber 3, the arms of the V spring 9 carrying at or adjacent their free ends obturator members 7 and 8 which are simultaneously urged axially apart by the spring member 9 to engage and seal with the inlet port 5 and the outlet port 6 respectively, the spring member 9 being configured so that it moves only a selected one of said obturator members 7,8 out of sealing engagement with its said port 5,6 at a time as the support member 11 is pivoted about its pivot axis.

The above form of device can readily be fabricated by moulding or other suitable techniques from a wide range of plastics and can be assembled by snap fitting the parts together and/or by permanently securing them together, e.g. by adhesive or by ultrasonic welding techniques, to provide a unitary construction which is resistant to tampering. The volume of fluid dispensed at each actuation of the device is determined by the curve form of the front face 4 of the chamber and this can be selected during manufacture of the device to ensure accuracy in operation. Alternatively, the front face can be interchangeable, giving a user the facility to vary the volume of fluid to be dispensed.

The operation of the above device is interlinked by the rotation of block 11 under the influence of the movement of lever 20 which causes the obturators 7 and 8 to move and also raises the air valve stem 31. Typically, obturator 7 seals against the rim of inlet port 5 well before obturator 8 lifts out of sealing engagement with outlet port 6. In this way no free path for the flow of fluid through chamber 3 is permitted and the volume of fluid discharged from chamber 3 is only that which it is designed to hold. The device of the invention thus reduces the risk of accidental discharge of excess fluid by slow or tremulous operation of the lever 20 by a user.

By way of example, the block 11 and spring 9 can be configured so that the following cycle of operations is achieved:
A. Within the first 15 to 35% of the travel of lever 20: obturator 7 moves into sealing engagement with inlet port 5 whilst obturator 8 remains in sealing engagement with outlet port 6 and the stem 31 remains out of contact with the upper face of block 11;
B. Within 40 to 60% of the full travel of lever 20: the obturators 7 and 8 remain in sealing engagement with the inlet and outlet ports, stem 31 bears against block 11 and begins to open the air inlet valve 30 to chamber 3;
C. Within 65 to 85% of the full travel of lever 20: the obturators 7 and 8 remain in sealing engagement with the inlet and outlet ports, the air inlet valve 30 is fully opened;
D. At 90% to 100% of the full travel of lever 20: obturator 8 lifts out of sealing engagement with the outlet port 6, obturator 7 remains in sealing engagement with the inlet port 5 and the air inlet valve 30 remains fully open, the full contents of chamber 3 discharge through the open outlet port 6.

When lever 20 is released, the outlet port is closed first, then the air valve is closed and finally the inlet port is opened to allow air from chamber 3 to rise into the bottle and fluid to flow from the bottle to fill chamber 3.

## Claims

1. A device for dispensing known aliquots of a fluid upon actuation of the device by a user operating an actuating mechanism, which device comprises a fluid receiving chamber (3) having a fluid inlet port (5) and a fluid outlet port (6) and valve means (7, 8, 9) located at least in part within the chamber (3) for regulating the flow of fluid into and out of the chamber (3), the valve means (7, 8, 9) comprising obturator members (7, 8) located within the chamber (3) and urged axially apart by a spring means (9) whereby they selectively engage with and seal the chamber inlet and outlet ports (5, 6) to the chamber (3), a pivotally mounted member (11) carrying said spring means and the actuating mechanism being adapted to act on the pivotally mounted member (11) so as to cause the pivotally mounted member (11) to pivot about an axis (12) so as to move the obturator members (7, 8) axially between a position at which the outlet port (6) is closed and the inlet port (5) is open and a position at which the outlet port (6) is open and the inlet port (5) is closed and vice versa, characterised in that:
a. the spring member (9) comprises two splayed apart leaf spring arms which carry the obturator members (7, 8) at or adjacent the free ends thereof, which spring arms are splayed apart sufficiently to urge the obturator members (7, 8) axially relative to one another and into sealing engagement with the co-operating inlet (5) or outlet (6) port of the chamber (3); and
b. the pivotally mounted member (11) is pivoted against the effect of said spring arms so as to move only a selected one of said obturator members (7, 8) out of sealing engagement with its co-operating port (5, 6) at a time.

2. A device as claimed in claim 1, characterised in that said spring arms of said spring member (9) are provided by a V spring (9) which is mounted at or adjacent its apex in said pivotally mounted member (11).

3. A device for dispensing known aliquots of a fluid upon actuation of the device by a user operating an actuating mechanism, which device comprises a fluid receiving chamber (3) having a fluid inlet port (5) and a fluid outlet port (6) and valve means (7, 8, 9) located at least in part within the chamber (3) for regulating the flow of fluid into and out of the chamber (3), the valve means (7, 8, 9) comprising obturator members (7, 8) located within the chamber (3)and urged axially apart by a spring means (9) whereby they selectively engage with and seal the chamber inlet and outlet ports (5, 6) to the chamber (3), a pivotally mounted member (11) carrying said spring means and the actuating mechanism being adapted to act on the pivotally mounted member (11) so as to cause the pivotally mounted member (11) to pivot about an axis (12) so as to move the obturator members (7, 8) axially between a position at which the outlet port (6) is closed and the inlet port (5) is open and a position at which the outlet port (6) is open and the inlet port (5) is closed and vice versa, characterised in that:
a. the spring member (9) comprises a compression spring member (10) located between the inlet port (5) and the outlet port (6) to chamber (3), which compression spring (10) carries the obturator members (7, 8) at or adjacent the free ends thereof, which compression spring (10) urges the obturator members (7, 8) axially relative to one another and into sealing engagement with the co-operating inlet (5) or outlet (6) port of the chamber (3); and
b. the pivotally mounted member (11) carries one or more projecting members adapted to engage said compression spring (10), which member (11) is pivoted to cause said projecting members to act against the effect of said compression spring (10) so as to move only a selected one of said obturator members (7, 8) out of sealing engagement with its co-operating port (5, 6) at a time.

4. A device as claimed in either of claims 1 or 3, characterised in that the spring member (9 or 10) is under compression so that as the member (11) pivots from one extreme of its travel to the other the spring member (9) or (10) exerts a sealing pressure on the first obturator (7) or (8) to maintain the first port (5) or (6) closed until the second obturator (8) or (7) seals with the second port (6) or (5) whereby both ports (5) and (6) are not open simultaneously.

5. A device as claimed in any one of the preceding claims, characterised in that the pivotally mounted member (11) is pivoted by means of an external lever mechanism (20, 21) actuated by a user presenting a container for the fluid to be dispensed from the device.

6. A device as claimed in any one of the preceding claims, characterised in that the fluid receiving chamber (3) has a triangular internal vertical cross-section and a vertical front face (4), said chamber (3) having at or adjacent its upper apex the fluid inlet port (5) and at or adjacent its lower apex the fluid outlet port (6).

7. A device as claimed in claim 6, characterised in that the pivotally mounted member (11) is mounted upon a transverse pivot pin (12) located at or adjacent the rearward apex of the chamber (3).

8. A device as claimed in any one of the preceding claims, characterised in that the member (11) is mounted upon a transverse pivot pin (12) and the member (11) is pivoted by means of an external arm (20) via an intermediate arm (21) carried by the pivot pin (12).

9. A method for dispensing beverages, characterised in that the beverage is dispensed using a device as claimed in any one of the preceding claims.

## Patentansprüche

1. Vorrichtung zur Ausgabe vorgegebener Mengen einer Flüssigkeit bei Betätigung der Vorrichtung durch einen Benutzer, der einen Betätigungsmechanismus betätigt, welche Vorrichtung eine Flüssigkeitsaufnahmekammer (3) mit einem Flüssigkeitseinlaß (5) und einem Flüssigkeitsauslaß (6) und Ventilmittel (7, 8, 9) aufweist, die mindestens teilweise innerhalb der Kammer (3) für ein Regulieren des Flüssigkeitsstroms in die und aus der Kammer (3) angeordnet sind, wobei die Ventilmittel (7, 8, 9) Verschlußglieder (7, 8) umfassen, die innerhalb der Kammer (3) angeordnet und axial auseinandergedrückt werden durch ein Federmittel (9), wodurch sie wahlweise mit dem Einlaß und Auslaß (5, 6) im Eingriff stehen und diese gegenüber der Kammer (3) abdichten, mit einem schwenkbar montierten Teil (11), welches die genannten Federmittel trägt und den Betätigungsmechanismus, der zur Einwirkung auf das schwenkbar montierte Teil (11) ausgebildet ist, um das schwenkbar montierte Teil (11) um eine Achse (12) derart zu verschwenken, daß die Verschlußglieder (7, 8) axial zwischen einer Position, in der der Auslaß (6) geschlossen und der Einlaß (5) offen ist und einer Position, in der der Auslaß (6) offen und der Einlaß (5) geschlossen ist, bewegt werden, und umgekehrt,
dadurch gekennzeichnet, daß
a. das Federglied (9) zwei auseinandergespreizte Blattfederarme umfaßt, welche die Verschlußglieder (7, 8) an oder benachbart zu deren freien Enden tragen, welche Federarme ausreichend auseinandergespreizt sind, um die Verschlußglieder in axialer Richtung relativ zueinander und in dichtende Anlage mit dem zusammenwirkenden Einlaß (5) oder Auslaß (6) der Kammer zu drükken; und
b. das schwenkbar montierte Teil (11) derart gegen die Wirkung der genannten Federarme verschwenkt wird, daß gleichzeitig lediglich ein ausgewähltes der genannten Verschlußglieder (7, 8) aus dem verschließenden Eingriff mit der zusammenwirkenden Öffnung (5, 6) bewegt wird.

2. Vorrichtung nach Anspruch 1,
dadurch gekennzeichnet,
daß die genannten Federarme des genannten Federglieds (9) durch eine V-Feder (9) gebildet werden, die an oder benachbart zu ihrem Scheitel in dem genannten schwenkbar montierten Glied (11) montiert ist.

3. Vorrichtung zur Ausgabe vorgegebener Mengen einer Flüssigkeit bei Betätigung der Vorrichtung durch einen Benutzer, der einen Betätigungsmechanismus betätigt, welche Vorrichtung eine Flüssigkeitsaufnahmekammer (3) mit einem Flüssigkeitseinlaß (5) und einem Flüssigkeitsauslaß (6) und Ventilmittel (7, 8, 9) aufweist, die mindestens teilweise innerhalb der Kammer (3) für ein Regulieren des Flüssigkeitsstroms in die und aus der Kammer (3) angeordnet sind, wobei die Ventilmittel (7, 8, 9) Verschlußglieder (7, 8) umfassen, die innerhalb der Kammer (3) angeordnet und axial auseinandergedrückt werden durch ein Federmittel (9), wodurch sie wahlweise mit dem Einlaß und Auslaß (5, 6) im Eingriff stehen und diesen gegenüber der Kammer (3) abdichten, mit einem schwenkbar montierten Teil (11), welches die genannten Federmittel trägt und den Betätigungsmechanismus, der zur Einwirkung auf das schwenkbar montierte Teil (11) ausgebildet ist, um das schwenkbar montierte Teil (11) um eine Achse (12) derart zu verschwenken, daß die Verschlußglieder (7, 8) axial zwischen einer Position, in der der Auslaß (6) geschlossen und der Einlaß (5) offen ist und einer Position, in der der Auslaß (6) offen und der Einlaß (5) geschlossen ist, bewegt werden, und umgekehrt,
dadruch gekennzeichnet, daß
a. das Federglied (9) ein Druckfederteil (10) umfaßt, das zwischen dem Einlaß (5) und dem Auslaß (6) der Kammer (3) angeordnet ist, welche Druckfeder (10) die Verschlußglieder (7, 8) an oder benachbart zu ihren freien Enden trägt, welche Druckfeder (10) die Verschlußglieder (7, 8) in axialer Richtung zueinander und in dichtende Anlage mit dem Einlaß (5) oder Auslaß (6) der Kammer (3) drückt; und
b. das schwenkbar montierte Teil (11) ein oder mehrere vorstehende Bereiche zum Eingriff mit der genannten Druckfeder (10) aufweist, welches Teil (11) verschwenkt wird um zu veranlassen, daß die vorstehenden Teile gegen die Wirkung der genannten Druckfeder (10) arbeiten, so daß gleichzeitig lediglich ein ausgewähltes der genannten Verschlußglieder (7, 8) aus dem verschließenden Eingriff mit der zusammenwirkenden Öffnung (5, 6) bewegt wird.

4. Vorrichtung nach einem der Ansprüche 1 oder 3,
dadurch gekennzeichnet,
daß das Federglied (9 oder 10) derart unter Vorspannung steht, daß, wenn das Teil (11) von einem Ende seines Weges zum anderen Ende verschwenkt, das Federglied (9) oder (10) einen dichtenden Druck auf das erste Verschlußglied (7) oder (8) ausübt, um den ersten Durchlaß (5) oder (6) geschlossen zu halten, bis das zweite Verschlußglied (8) oder (7) den zweiten Durchlaß (6) oder (5) abdichtet, wodurch beide Durchlässe (5) und (6) nicht gleichzeitig offen sind.

5. Vorrichtung nach einem der vorhergehenden Ansprüche,
dadurch gekennzeichnet,
daß das schwenkbar montierte Teil (11) mit Hilfe eines äußeren Hebelmechanismus (20, 21) verschwenkt wird, der von einem Benutzer betätigt wird, der einen Behälter für die von der Vorrichtung auszugebende Flüssigkeit bereitstellt.

6. Vorrichtung nach einem der vorhergehenden Ansprüche,
dadurch gekennzeichnet,
daß die flüssigkeitsaufnehmende Kammer (3) einen dreieckigen inneren, vertikalen Querschnitt und eine vertikale Frontfläche (4) aufweist, wobei die Kammer (3) an oder benachbart zu ihrem oberen Scheitel den Flüssigkeitseinlaß (5) und an oder benachbart zu ihrem unteren Scheitel den Flüssigkeitsauslaß (6) aufweist.

7. Vorrichtung nach Anspruch 6,
dadurch gekennzeichnet,
daß das schwenkbar montierte Teil (11) auf einem quer verlaufenden Gelenkzapfen (12) montiert ist, der an oder benachbart zum rückwärtigen Scheitel der Kammer (3) angeordnet ist.

8. Vorrichtung nach einem der vorhergehenden Ansprüche,
dadurch gekennzeichnet,
daß das Teil (11) auf einem quer verlaufenden Gelenkzapfen (12) gelagert ist und das Teil (11) mit Hilfe eines äußeren Arms (20) über einen vom Gelenkzapfen (12) getragenen Zwischenarm (21) verschwenkt wird.

9. Verfahren zum Ausgeben von Getränken,
dadurch gekennzeichnet,
daß das Getränk unter Verwendung einer Vorrichtung ausgegeben wird, wie sie in einem der vorangehenden Ansprüche beansprucht ist.

## Revendications

1. Dispositif pour délivrer des fractions connues d'un fluide sur actionnement du dispositif par un utilisateur manoeuvrant un mécanisme d'actionnement, lequel dispositif comprend une chambre de réception de fluide (3) comportant un orifice d'entrée de fluide (5) et un orifice de sortie de fluide (6) et des moyens de vanne (7, 8, 9) situés au moins en partie à l'intérieur de la chambre (3) pour régler l'écoulement de fluide dans et hors de la chambre (3), les moyens de vanne (7, 8, 9) comprenant des éléments obturateurs (7,8) situés à l'intérieur de la chambre (3) et repoussés axialement à l'écart l'un de l'autre par un élément de ressort (9), moyennant quoi ils s'engagent dans les orifices d'entrée et de sortie (5, 6) de la chambre (3) et les obturent, un élément monté de façon pivotante (11) portant ledit élément de ressort et le mécanisme d'actionnement étant conçu pour agir sur l'élément monté de façon pivotante (11) de façon à faire pivoter l'élément monté de façon pivotante (11) sur un axe (12) de façon à déplacer les éléments obturateurs (7, 8) axialement entre une position dans laquelle l'orifice de sortie (6) est fermé et l'orifice d'entrée (5) est ouvert et une position dans laquelle l'orifice de sortie (6) est ouvert et l'orifice d'entrée (5) est fermé et vice versa, caractérisé en ce que :
a. l'élément de ressort (9) comprend deux bras de ressort à lames écartés qui portent les éléments obturateurs (7, 8) à leurs extrémités libres ou au voisinage de celles-ci, lesquels bras de ressort sont suffisamment écartés pour repousser axialement à l'écart l'un de l'autre les éléments obturateurs (7, 8) et en position d'obturation avec l'orifice d'entrée (5) ou de sortie (6) de la chambre (3) associé ; et
b. l'élément monté de façon pivotante (11) pivote à l'encontre de l'effet desdits bras de ressort de façon à dégager uniquement l'un choisi desdits éléments obturateurs (7, 8) hors de la position d'obturation avec son orifice associé (5, 6) à la fois.

2. Dispositif selon la revendication 1, caractérisé en ce que lesdits bras de ressort dudit élément de ressort (9) sont munis d'un ressort en V (9) qui est monté à son sommet ou au voisinage de celui-ci dans ledit élément monté de façon pivotante (11).

3. Dispositif pour délivrer des fractions connues d'un fluide sur actionnement du dispositif par un utilisateur manoeuvrant un mécanisme d'actionnement, lequel dispositif comprend une chambre de réception de fluide (3) comportant un orifice d'entrée de fluide (5) et un orifice de sortie de fluide (6) et des moyens de vanne (7, 8, 9) situés au moins en partie à l'intérieur de la chambre (3) pour régler l'écoulement de fluide dans et hors de la chambre (3), les moyens de vanne (7, 8, 9) comprenant des éléments obturateurs (7,8) situés à l'intérieur de la chambre (3) et repoussés axialement à l'écart l'un de l'autre par un élément de ressort (9), moyennant quoi ils s'engagent dans les orifices d'entrée et de sortie (5, 6) de la chambre (3) et les obturent, un élément monté de façon pivotante (11) portant ledit élément de ressort et le mécanisme d'actionnement étant conçu pour agir sur l'élément monté de façon pivotante (11) de façon à faire pivoter l'élément monté de façon pivotante (11) sur un axe (12) de façon à déplacer les éléments obturateurs (7, 8) axialement entre une position dans laquelle l'orifice de sortie (6) est fermé et l'orifice d'entrée (5) est ouvert et une position dans laquelle l'orifice de sortie (6) est ouvert et l'orifice d'entrée (5) est fermé et vice versa, caractérisé en ce que :
a. l'élément de ressort (9) comprend un élément de ressort de compression (10) situé entre l'orifice d'entrée (5) et l'orifice de sortie (6) de la chambre (3), lequel ressort de compression (10) porte les éléments obturateurs (7, 8) à ses extrémités libres ou au voisinage de celles-ci, lequel ressort de compression (10) presse axialement sur les éléments obturateurs (7, 8) l'un par rapport à l'autre et en position d'obturation avec l'orifice d'entrée (5) ou de sortie (6) de la chambre (3) associé ; et
b. l'élément monté de façon pivotante (11) porte un ou plusieurs éléments en saillie conçus pour venir en prise avec ledit ressort de compression (10), lequel élément (11) pivote pour faire agir lesdits éléments en saillie à l'encontre de l'effet dudit ressort de compression (10) de façon à déplacer uniquement l'un choisi desdits éléments obturateurs (7, 8) hors de la position d'obturation avec son orifice associé (5, 6) à la fois.

4. Dispositif selon l'une quelconque des revendications 1 ou 3, caractérisé en ce que l'élément de ressort (9 ou 10) est comprimé de sorte que quand l'élément (11) pivote d'une extrémité de sa course à l'autre, l'élément de ressort (9) ou (10) exerce une pression d'obturation sur le premier obturateur (7) ou (8) pour maintenir le premier orifice (5) ou (6) fermé jusqu'à ce que le deuxième obturateur (8) ou (7) obture le deuxième orifice (6) ou (5) moyennant quoi les deux orifices (5) et (6) ne sont pas ouverts simultanément.

5. Dispositif selon l'une quelconque des revendications précédentes, caractérisé en ce que l'élément monté de façon pivotante (11) pivote au moyen d'un mécanisme à levier extérieur (20, 21) actionné par un utilisateur présentant un conteneur pour le fluide à délivrer du dispositif.

6. Dispositif selon l'une quelconque des revendications précédentes, caractérisé en ce que la chambre de réception de fluide (3) présente une section transversale verticale intérieure triangulaire et une face avant verticale (4), ladite chambre (3) présentant à sa pointe supérieure ou au voisinage de celle-ci l'orifice d'entrée de fluide (5) et à sa pointe inférieure ou au voisinage de celle-ci l'orifice de sortie de fluide (6).

7. Dispositif selon la revendication 6, caractérisé en ce que l'élément monté de façon pivotante (11) est monté sur une cheville de pivot transversale (12) située à la pointe arrière de la chambre (3) ou au voisinage de celle-ci.

8. Dispositif selon la revendication 6, caractérisé en ce que l'élément monté de façon pivotante (11) est monté sur une cheville de pivot transversale (12) et l'élément pivote au moyen d'un bras extérieur (20) par l'intermédiaire d'un bras intermédiaire (21) porté par la cheville de pivot (12).

9. Procédé pour délivrer des boissons, caractérisé en ce que la boisson est délivrée en utilisant un dispositif selon l'une quelconque des revendications précédentes.
